# EUROPÄISCHE PATENTSCHRIFT

(11) **EP 1 217 248 B1**
(45) Veröffentlichungstag und Bekanntmachung des Hinweises auf die Patenterteilung: **22.09.2004**
(21) Anmeldenummer: 01129489.9
(22) Anmeldetag: 11.12.2001
(51) Int. Cl.: F16D 65/12

(54) **Auf einer Radnabe verschiebbare Bremsscheibe**
Brake disc displacable on a hub
Disque de frein déplaçable sur un moyeu

(30) Priorität: 21.12.2000 DE 10063878; 28.11.2001 DE 10158501
(43) Veröffentlichungstag der Anmeldung: 26.06.2002
(73) Patentinhaber: BPW Bergische Achsen Kommanditgesellschaft, 51674 Wiehl (DE)
(72) Erfinder: Golchert, Joern, 71120 Grafenau (DE); Häussler, Harald, 71292 Friolzheim (DE); Mertens, Carsten-Jörg, 71134 Aidlingen (DE)
(74) Vertreter: Christophersen & Partner

(56) Entgegenhaltungen:
- EP-A- 0 726 406
- DE-C- 19 751 522
- US-A- 3 754 624
- US-A- 4 256 209
- US-A- 4 605 103

## Beschreibung

Die Erfindung bezieht sich auf eine Bremsvorrichtung mit einer auf einer Außenverzahnung einer Radnabe verschiebbar angeordneten Bremsscheibe nach dem Oberbegriff des Anspruchs 1.

Aus der DE 198 10 593 A1 ist eine Radbremse bekannt, die einen auf einer Radnabe axial verschiebbaren Reibring aufweist, der über eine Zahnverbindung mit der Radnabe verdrehsicher verbunden ist. Des Weiteren ist aus der DE 197 51 522 C1 eine Bremsscheibe-/Nabenverbindung für Fahrzeugbremsen zur Verbindung einer ringförmigen Bremsscheibe mit einer Scheibennabe bekannt. Diese Verbindung besteht aus korrespondierenden zahnartigen Elementen in der Bremsscheibe sowie in der Radnabe. Ferner ist aus der US 3,191,735 eine Kupplungseinrichtung mit einer Kupplungsscheibe bekannt, die im Kupplungsgehäuse auf einer Verzahnung geführt ist, welche von einem eine Verzahnung aufweisenden Abdeckelement gebildet wird, das fest mit dem Kupplungsgehäuse verbunden ist. Aus der DE 298 22 647 U1 ist eine Hohlwelle mit einer Kupplungsbuchse bekannt, wobei diese durch einen Abtriebszapfen eines Planetenträgers gebildet wird. In der Hohlwelle ist mittels einer gegenseitigen Verzahnung eine Kupplungsbuchse mit einem Innengewinde unverschiebbar eingesetzt, in welcher die Maschinenwelle antriebsverbunden gehalten wird.

Aus der US 4,605,103 ist eine aus zwei nebeneinander angeordneten Bremsscheiben aufgebaute Bremsvorrichtung bekannt, von denen die fahrzeugaußenseitige Bremsscheibe gegen axiales Verschieben gesichert ist. Die innere Bremsscheibe ist verschiebbar und an einer mit einer kurzen Innenverzahnung versehenen Hülse befestigt, die auf einer Außenverzahnung der Nabe verschiebbar gelagert ist. Die Bremsscheibe selbst ist mit einem Vorsprung der Hülse verschraubt. An den beiden Enden der Hülse fehlt die Innenverzahnung, vielmehr sind dort Führungsringe untergebracht, die die aus Hülse und Scheibe gebildete Verschiebeeinheit gegen Schrägstellung und Verkantung schützen sollen. Unter diesen Hülsen kann es zu Verschmutzungen kommen, welche die Funktionssicherheit der Bremse beeinträchtigen.

Aufgabe der Erfindung ist es, eine Bremsvorrichtung mit einer auf einer Verzahnung einer Radnabe verschiebbar angeordneten Bremsscheibe zu schaffen, die funktionssicher angeordnet und verschiebbar ist und bei welcher die Verunreinigungen der Radnaben-Verzahnung reduziert werden.

Diese Aufgabe wird erfindungsgemäß durch die Merkmale der unabhängigen Ansprüche 1 und 15 gelöst. Weitere vorteilhafte Merkmale beinhalten die Unteransprüche.

Die mit der Erfindung hauptsächlich erzielten Vorteile bestehen darin, daß durch einen Adapterring zwischen der Bremsscheibe und der Radnabe die Verzahnung der Radnabe gegen von außen eindringende Verunreinigungen abgeschirmt wird. Hierzu ist erfindungsgemäß vorgesehen, daß die Innenverzahnung von einem Adapterring gebildet wird, der mit der Bremsscheibe über Befestigungselemente zu einer Verschiebeeinheit fest verbunden ist und diese Einheit verschiebbar auf der Außenverzahnung der Radnabe angeordnet ist. Die Außenverzahnung der Radnabe greift in eine gegenüberstehende Innenverzahnung des Adapterringes ein. Vorzugsweise ist vorgesehen, daß die gegenseitig in Eingriff stehenden Verzahnungen zwischen dem Adapterring und der Bremsscheibe eine größere Anzahl von Zähnen aufweisen als die gegenseitig in Eingriff stehenden Verzahnungen zwischen der Radnabe und dem Adapterring.

Eine Festsetzung der Bremsscheibe in Umfangsrichtung auf dem Adapterring erfolgt über die gegenseitigen Verzahnungen, wobei die Bremsscheibe in Axialrichtung über die Befestigungselemente, welche aus Federringen oder aus zwischen rundum verlaufenden Anformungen am Adapterring bestehen, eingespannt befestigbar sind. Hierdurch ist sichergestellt, daß die Bremsscheibe mit dem Adapterring in Axial- und in Umfangsrichtung auf dem Adapterring mit einfachen Mitteln festsetzbar ist. Die Anformungen können durch Verstanzungen, Verrollungen, Anstauchungen oder dgl. erfolgen. In jedem Fall ist zwischen diesen Anformungen und dgl. an jeder Seite der Bremsscheibe diese fest eingeklemmt auf den Verzahnungen des Adapterringes gehalten.

Der Adapterring erstreckt sich vorzugsweise über die gesamte Länge der Außenverzahnung der Radnabe und bildet somit einen Schutz gegen Verunreinigungen, Korrosion und dgl., welche einer Verschiebung der Bremsscheibe auf der Radnabe behindern könnten.

Da der Adapterring unveränderlich an der Bremsscheibe befestigt ist und sich beim Bremsvorgang exakt mit der Bremsscheibe axial bewegt, ist es gewährleistet, daß die Verzahnung der Radnabe von Verunreinigungen geschützt gehalten wird.

Um dem axialen Wandern der Bremsscheiben durch zunehmenden Verschleiß der beim Bremsvorgang aneinander reibenden Teile gerecht zu werden, kann er Adapterring im Neuzustand entsprechend über die Nabenverzahnung hinaus verlängert sein, um auch bei fortgeschrittener Abnutzung z.B. der Beläge die Nabenverzahnung vollständig abzudecken.

Die Festlegung des Adapterringes an der Bremsscheibe kann beispielsweise über zwei Federelemente erfolgen, wobei jeweils ein Federelement an jeder Seite der Bremsscheibe angeordnet ist und diese zwischen sich hält. Die freien Enden dieser Federelemente sind vorzugsweise abgewinkelt und zum Festsitzen in mindestens eine Zahnlücke der Verzahnung des Adapterringes einsteckbar.

Zwischen der Verzahnung des Adapterringes und der Außenverzahnung der Radnabe ist vorzugsweise jeweils im Bereich der Zahnstirnflächen ein Freiraum bzw. ein Spalt zum Verschieben des Adapterringes mit Bremsscheibe vorgesehen.

Zur Belüftung und Kühlung der Bremsscheibe können in der Innenverzahnung der Bremsscheibe ausmündende Luftöffnungen vorgesehen sein. In diesem Fall ist die Innenverzahnung der Bremsscheibe nur mit der halben Zähnezahl des Adapterringes ausgeführt, so daß die Luftöffnungen zwischen zwei Zähnen in eine Zahnlücke ausmünden. Desweiteren ist nach einer weiteren Aufführungen vorgesehen, Luftöffnungen im Reibring der Bremsscheibe vorzusehen, wobei diese konzentrisch zur Innenverzahnung angeordnet sind und in der Innenverzahnung dann keine Luftöffnungen ausmünden, sondern in die Luftkanäle einmünden. In diesem Fall kann die Zähnezahl der Innenverzahnung der Zähnezahl des Adapterringes entsprechen.

Der Adapterring kann beispielsweise aus einem Sinterteil, einem stranggepreßten Teil oder aus einem Blechformteil bestehen. Der Adapterring kann nach einer weiteren Aufführung auch einteilig mit der Bremsscheibe ausgeführt sein, das heißt, aus einem Gußteil bestehen, wobei jeweils abragende Ansätze an den außenliegenden Reibflächen vorgesehen sind und die gesamte Länge der Ansätze und die Dicke der Bremsscheibe etwa die gesamte Außenverzahnung der Radnabe abdeckt. Desweiteren kann der Adapterring auch über eine stoffschlüssige Verbindung mit der Bremsscheibe verbunden sein, so daß durch diese Verbindung eine Einteiligkeit zwischen Bremsscheibe und Adapterring besteht.

Als Werkstoff für den Adapterring kann Metall oder Keramik Verwendung finden, in jedem Fall sollte der Adapterring korrosionsbeständig sein. In vorteilhafter Weise ist der Adapterring im Verschiebebereich oberflächenhart ausgeführt, wobei der der Innenverzahnung der Bremsscheibe zugerichtete Bereich keine besondere Oberflächenhärte aufweisen muß.

Ausführungsbeispiele der Erfindung sind in den Zeichnungen dargestellt und werden im folgenden näher beschrieben.

Es zeigen:
- Fig. 1: eine schaubildliche Darstellung einer Bremsvorrichtung mit Radnabe, Adapterring, Bremsscheibe und Befestigungselementen,

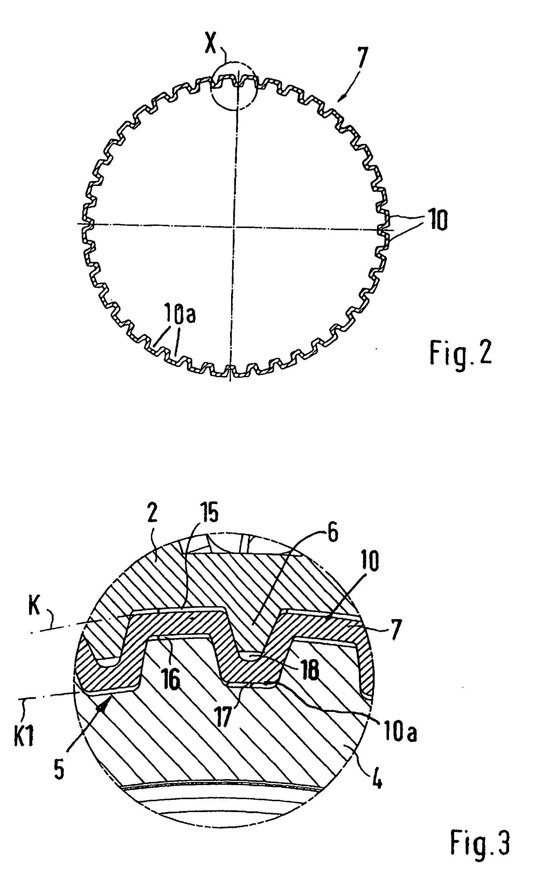

- Fig. 2: einen Querschnitt durch den Adapterring,
- Fig. 3: eine vergrößerte Darstellung der Einzelheit X aus Fig. 2,
- Fig. 4: eine Ausführung einer Bremsscheibe mit Adapterring und axial angeordneten Luftöffnungen in der Bremsscheibe,
- Fig. 5: eine schaubildliche Darstellung der Radnabe mit Bremsscheibe und ohne Adapterring,

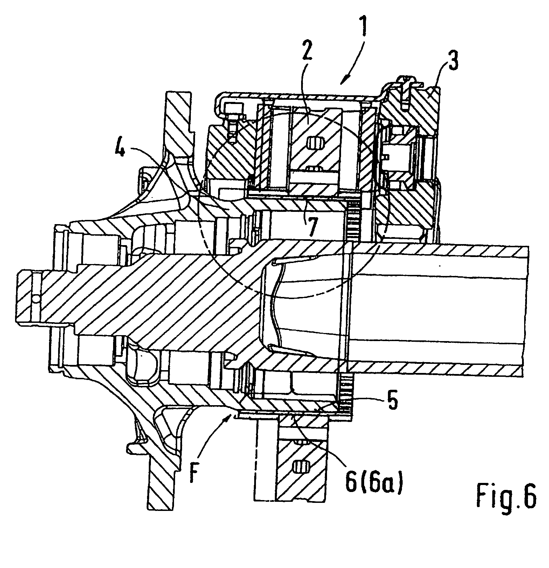

- Fig. 6: einen Schnitt durch die Bremsvorrichtung,
- Fig. 7: einen Vertikalschnitt durch die Bremsvorrichtung,
- Fig. 8: einen Querschnitt durch die Bremsvorrichtung mit Radnabe, Adapterring und Bremsscheibe,
- Fig. 9: eine schaubildliche Darstellung der Bremsscheibe mit innenliegender Verzahnung und zugehörigem Adapterring,
- Fig. 10: einen Schnitt durch die auf dem Adapterring über Anstauchungen festgelegte Bremsscheibe,
- Fig. 10a: eine weitere Ausführungsform der Bremsscheibe mit Adapterring in einteiliger Form im Schnitt und
- Fig. 11: eine Ansicht auf die auf dem Adapterring festgesetzte Bremsscheibe.

Die Bremsvorrichtung 1 umfaßt im wesentlichen eine innenbelüftete Bremsscheibe 2, die beidseitig Bremsbeläge in einem ortsfesten Bremssattel 3 aufweist. Die Bremsscheibe 2 ist axial verschiebbar auf einer Radnabe 4 und drehfest gehalten. Diese weist hierzu eine Außenverzahnung 5 auf, welche korrespondierend zu einer Innenverzahnung 6; 6a; 6b der Bremsscheibe 2 angeordnet ist. Zwischen der Außenverzahnung 5 der Radnabe 4 und der Innenverzahnung 6; 6a; 6b der Bremsscheibe 2 ist ein Adapterring 7 angeordnet. Dieser Adapterring 7 weist eine zu der Innenverzahnung 6; 6a; 6b der Bremsscheibe 2 eine entsprechende Verzahnung 10; 10b auf.

Die Bremsscheibe 2 ist über Befestigungselemente 9, 9a; 20, 21 fest mit dem Adapterring 7 verbunden, so daß eine Verschiebung der Bremsscheibe 2 mitsamt dem Adapterring 7 auf der Außenverzahnung 5 der Radnabe 4 im Betrieb erfolgt.

Die Länge L des Adapterringes 7 entspricht in etwa der Länge der Außenverzahnung 5 der Radnabe 4, so daß diese Verzahnung in Ruhestellung vollkommen abgedeckt ist. Zum unbehinderten Verschieben der Einheit Bremsscheibe 2 und Adapterring 7 ist ein Freiraum F in Verschieberichtung an der Radnabe 4 vorgesehen.

Die Verzahnungen 10, 10a des Adapterringes 7 können zu der Innen- und Außenverzahnung 6; 6a und 5 jeweils kopfseitig einen Spalt 15, 16 sowie 17, 18 aufweisen.

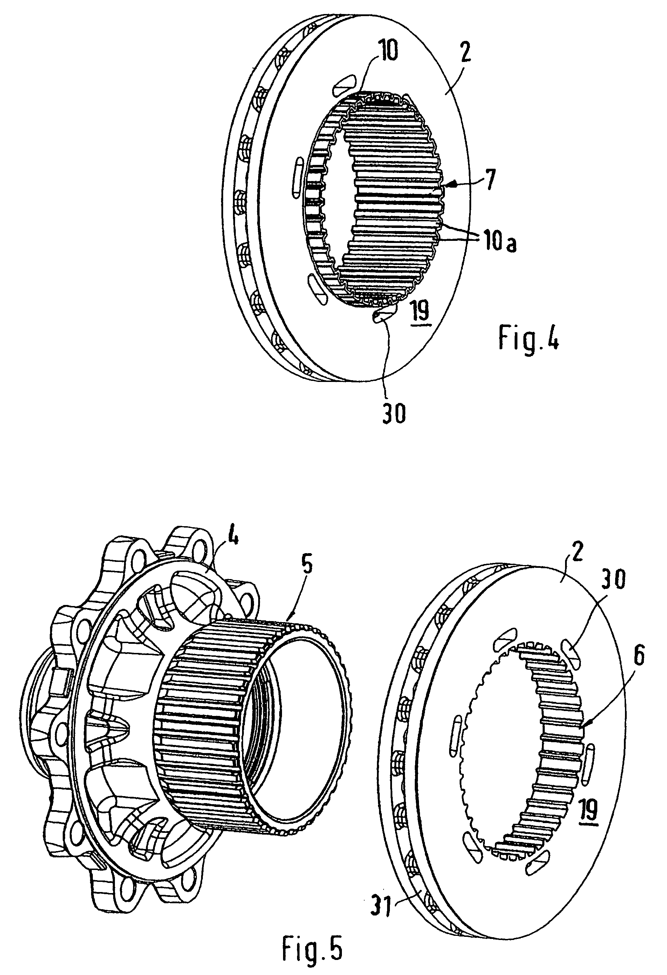

Gemäß der Ausführung nach den Fig. 4 und 5 weist die Bremsscheibe 2 zur Innenbelüftungen in den Reibringen 19 Luftöffnungen 30 auf, die konzentrisch zur Innenverzahnung 6 angeordnet sind und in radiale Luftkanäle 31 der Bremsscheibe 2 einmünden. Bei dieser Bremsscheibe 2 entspricht die Zähnezahl der Innenverzahnung 6 der Zähnezahl der Außenverzahnung 5 der Radnabe 4.

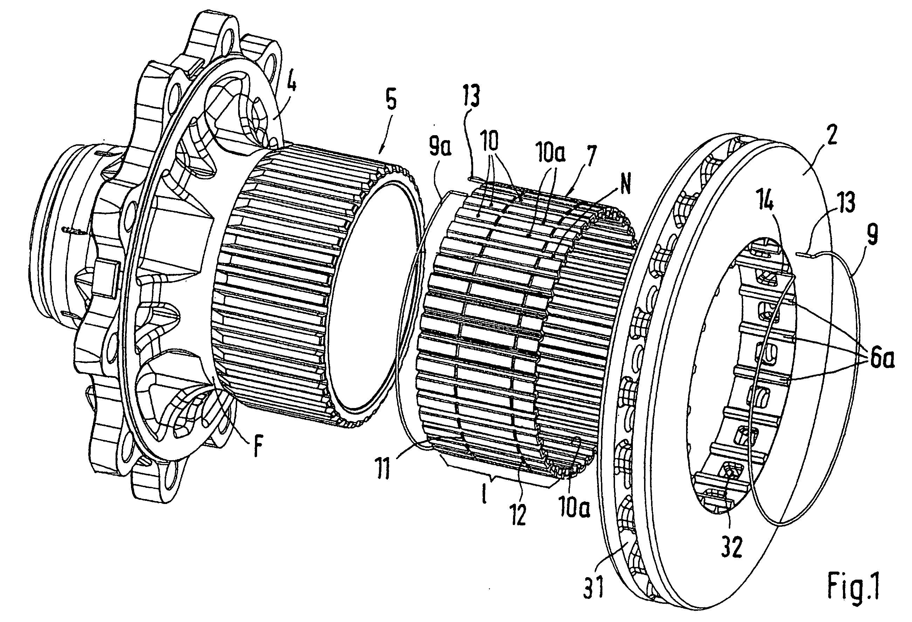

Nach einer weiteren Ausführung der Erfindung gemäß Fig. 1 kann die Bremsscheibe 2 zwischen den Zähnen der Innenverzahnung 6a Luftöffnungen 32 aufweisen, die in Verlängerung der radialen Luftkanäle 31 angeordnet sind. Die Zähnezahl der Innenverzahnung 6a besteht aus der Hälfte der Zähnezahl der Außenverzahnung 10 des Adapterringes 7. Hierdurch ist den Luftöffnungen 32 jeweils ein Nutgrund N zwischen zwei Zähnen der Verzahnung 10 des Adapterringes 7 zugerichtet.

Der Adapterring 7 kann aus einem Sintermaterial, einem stranggepreßten Teil oder aus einem Blechformteil bestehen. Materialien für den Adapterring 7 können Stahl, Leichtmetalle, Kunststoffe oder Keramiken sein. In jedem Fall sollte der Adapterring 7 im Verschiebebereich, das heißt, an seiner der Außenverzahnung 5 zugerichteten Zahnfläche oberflächenhart ausgeführt sein.

Der Adapterring 7 weist an den Zahnenden sogenannte Einführschrägen auf und die Verzahnung 5 ist am Nabenende mit einer Fase als Einführhilfe versehen.

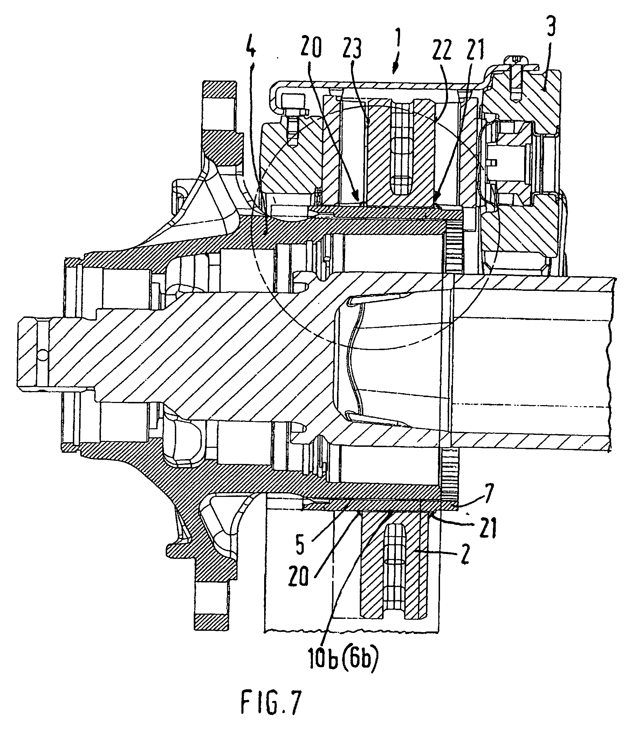

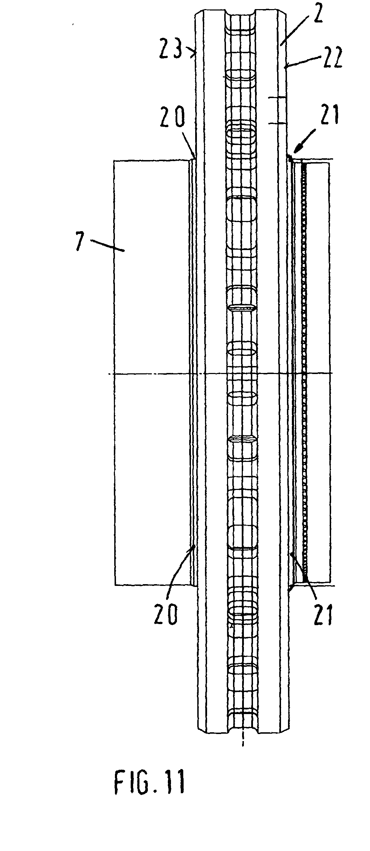

Nach einer weiteren Ausführung der Erfindung gemäß den Fig. 7 bis 11 ist die Bremsscheibe 2 auf dem Adapterring 7 über die ineinandergreifenden Verzahnungen 6b und 10b in Umfangsrichtung gehalten. Zum Festsetzen in axialer Richtung auf dem Adapterring 7 ist die Bremsscheibe 2 zwischen Befestigungselementen, in Form von Verrollungen, Anstauchungen, Anformungen 20, 21 und dgl. am Adapterring 7, die rundum vorgesehen sind, eingespannt gehalten.

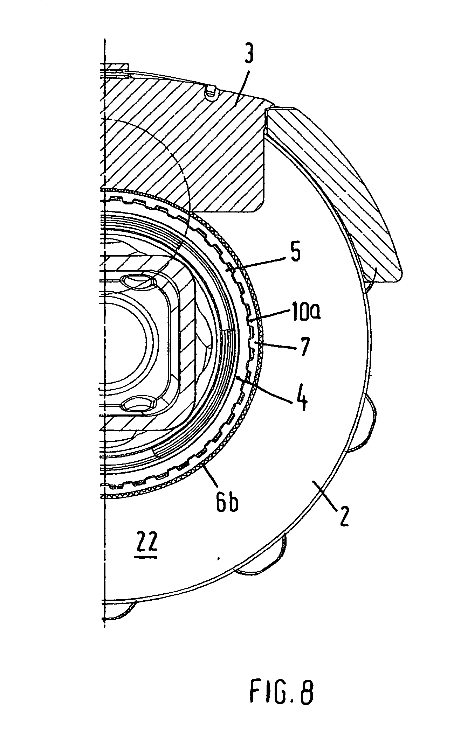

Die Außenverzahnung 5 der Radnabe 4, gemäß Fig. 8, steht in einem korrespondierenden Eingriff mit der Innenverzahnung 10a des Adapterringes 7, wobei der Zahneingriff gegenseitig erfolgt, das heißt, jeder Zahn der Verzahnung 5 greift in eine gegenüberliegende Lücke der Verzahnung 10a und umgekehrt ein.

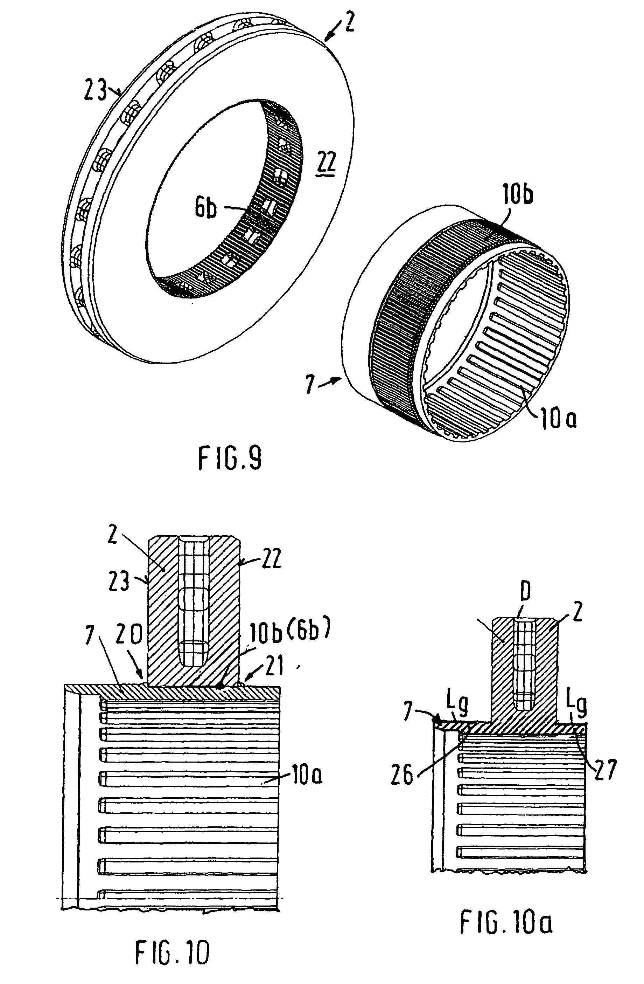

Wie in den Fig. 9 und 10 näher dargestellt ist, weist die Innenverzahnung 6b der Bremsscheibe 2 und die Außenverzahnung 10b des Adapterringes 7 eine wesentlich größere Anzahl von Zähnen auf, als die Innenverzahnung 10a des Adpaterringes 7.

Die Bremsscheibe 2 ist auf der engen Verzahnung 10b des Adapterringes 7 in Umfangsrichtung gehalten und mittels seitlich der Reibflächen 22, 23 der Bremsscheibe 2 vorgesehenen rundum angeordneten Anformungen 20, 21 als Befestigungselemente in Achsrichtung festgesetzt, wie es insbesondere in Fig. 10 dargestellt ist. Hierdurch ist ein fester Sitz der Bremsscheibe 2 auf dem Adapterring 7 gewährleistet.

Nach einer weiteren Ausführung der Erfindung gemäß Fig. 10a kann die Bremsscheibe 2 mit dem Adapterring 7 auch derart einteilig ausgeführt sein, so daß die Befestigungselemente 20, 21 (Fig. 10) und 9, 9a (Fig. 1) entfallen können. Der Adapterring 7 wird hierbei entweder gleichzeitig mit der Bremsscheibe 2 gegossen oder aber es erfolgt eine feste stoffschlüssige Verbindung der Bremsscheibe 2 mit dem Adapterring 7, so daß auch hierdurch letztendlich eine Einteiligkeit hergestellt wird.

## Patentansprüche

1. Bremsvorrichtung mit einer auf einer Außenverzahnung (5) einer Radnabe (4) verschiebbar angeordneten Bremsscheibe (2) die mit einer Innenverzahnung (6) versehen ist,
**dadurch gekennzeichnet,**
**daß** eine weitere Innenverzahnung (10a) von einem Adapterring (7) gebildet wird, der zumindest eine Länge (I) aufweist, welche die gesamte Außenverzahnung (5) der Radnabe (4) abdeckt und der über Befestigungselemente (9, 9a, 20, 21) fest mit der Bremsscheibe (2) zu einer Verschiebeeinheit verbindbar ist, und diese Einheit (7, 2) verschiebbar auf der Außenverzahnung (5) der Radnabe (4) angeordnet ist.

2. Bremsvorrichtung nach Anspruch 1, **dadurch gekennzeichnet, daß** die Außenverzahnung (5) der Radnabe (4) in eine gegenüberstehende Innenverzahnung (10a) des Adapterrings (7) zur Erzielung einer Verschiebeverbindung eingreift.

3. Bremsvorrichtung nach den Ansprüchen 1 oder 2, **dadurch gekennzeichnet, daß** gegenseitig in Eingriff stehende Verzahnungen (10b und 6b) zwischen dem Adapterring (7) und der Bremsscheibe (2) eine größere Anzahl von Zähnen aufweisen, als die gegenseitig im Eingriff stehenden Zähne der Verzahnungen (5 und 10a) zwischen der Radnabe (4) und dem Adapterring (7).

4. Bremsvorrichtung nach den Ansprüchen 1, 2 oder 3, **dadurch gekennzeichnet, daß** die Bremsscheibe (2) in Umfangsrichtung über die gegenseitigen Verzahnungen (6; 6a; 6b und 10) auf dem Adapterring (7) festgesetzt ist und daß die Bremsscheibe (2) in Axialrichtung über die Befestigungselemente, welche aus rundum verlaufenden oder partiellen Anformungen (20, 21) bestehen, am Adapterring (7) eingespannt befestigbar ist.

5. Bremsvorrichtung nach den Ansprüchen 1, 2, 3 oder 4, **dadurch gekennzeichnet, daß** die Bremsscheibe (2) als innenbelüftete Bremsscheibe Luftöffnungen (30, 32) besitzt.

6. Bremsvorrichtung nach Anspruch 1, **dadurch gekennzeichnet, daß** die Befestigungselemente (9, 9a) aus Federringen bestehen, welche in Ringnuten (11, 12) der Verzahnung des Adapterrings (7) zu beiden Seiten der Reibflächen (19) der Bremsscheibe (2) haltend angeordnet sind.

7. Bremsvorrichtung nach den Ansprüchen 1 und 6, **dadurch gekennzeichnet, daß** die freien Enden (13, 14) der Federringe (9, 9a) abgewinkelt und zur Festlegung in die Verzahnung (10) des Adapterrings (7) einsteckbar sind.

8. Bremsvorrichtung nach den Ansprüchen 1 und 7, **dadurch gekennzeichnet, daß** die Tiefe der Ringnuten (11, 12) für die Federringe (9, 9a) kleiner ist als die Wandstärke des Adapterrings (7).

9. Bremsvorrichtung nach einem oder mehreren der vorhergehenden Ansprüche, **dadurch gekennzeichnet, daß** jeweils zwischen Kopfkreisen (K, K1) der Verzahnung (10, 10a) des Adapterrings (7) und Kopfkreisen der Verzahnung (5) der Radnabe (4) und der Bremsscheibe (2) ein Spalt (15, 16, 17 u. 18) vorgesehen ist.

10. Bremsvorrichtung nach einem oder mehreren der vorhergehenden Ansprüche, **dadurch gekennzeichnet, daß** die Innenverzahnung (6a) der Bremsscheibe (2) weniger Zähne aufweist als die äußere Verzahnung (10) des Adapterrings (7) und jeweils zwischen zwei benachbarten Zähnen der Innenverzahnung (6a) der innenbelüfteten Bremsscheibe (2) Luftöffnungen (22) ausmünden, die jeweils einer Zahnlücke (N) der äußeren Verzahnung (10) des Adapterrings (7) zugerichtet sind.

11. Bremsvorrichtung nach einem oder mehreren der vorhergehenden Ansprüche, **dadurch gekennzeichnet, daß** die Innenverzahnung (6) der Bremsscheibe (2) eine gleiche Anzahl Zähne aufweist, wie die innere Verzahnung (10a) des Adapterrings (7) und daß die innenbelüftete Bremsscheibe (2) in den Reibflächen (19, 22, 23) Luftöffnungen (30) besitzt, welche die Innenverzahnung (6) konzentrisch umgeben und welche in radiale Luftkanäle (31) der innenbelüfteten Bremsscheibe (2) einmünden.

12. Bremsvorrichtung nach einem oder mehreren der vorhergehenden Ansprüche, **dadurch gekennzeichnet, daß** die Radnabe (4) einen Freiraum (F) in Verschieberichtung des Adapterrings (7) aufweist.

13. Bremsvorrichtung nach einem oder mehreren der vorhergehenden Ansprüche, **dadurch gekennzeichnet, daß** der Adapterring (7) aus einem Sinterteil besteht.

14. Bremsvorrichtung nach einem oder mehreren der vorhergehenden Ansprüche, **dadurch gekennzeichnet, daß** der Adapterring (7) aus einem Blechformteil besteht.

15. Bremsvorrichtung mit einer auf einer Außenverzahnung (5) einer Radnabe (4) verschiebbar angeordneten Bremsscheibe (2) die mit einer Innenverzahnung versehen ist,
**dadurch gekennzeichnet,**
**daß** ein Adapterring (7) mit einer Innenverzahnung (10a) mit der Bremsscheibe (2) einteilig ausgebildet ist und jeweils abragende Ansätze (26, 27) an den außenliegenden Bremsscheiben-Reibflächen (23, 22) angeformt sind und die gesamte Länge (LG) der Ansätze (26, 27) und die Dicke (D) der Bremsscheibe (2) die gesamte Außenverzahnung (5) der Radnabe (4) abdecken.

16. Bremsvorrichtung nach Anspruch 15, **dadurch gekennzeichnet, daß** die Bremsscheibe (2) und der Adapterring (7) stoffschlüssig zu einem einteiligen Verschiebeteil verbunden sind.

17. Bremsvorrichtung nach einem oder mehreren der vorhergehenden Ansprüche, **dadurch gekennzeichnet, daß** der Adapterring (7) im anliegenden Verschiebebereich (Verzahnung 10a) auf der Verzahnung (5) der Radnabe (4) oberflächenhart ausgeführt ist.

## Claims

1. Braking device comprising a brake disc (2) arranged such that it can be displaced on an outer toothing (5) of a wheel hub (4), said brake disc (2) being provided with an inner toothing (6), **characterized in that** a further inner toothing (10a) is formed by an adapter ring (7) which has a length (1) that at least covers the entire outer toothing (5) of the wheel hub (4) and which can be fixedly connected to the brake disc (2) via fastening elements (9, 9a, 20, 21) to form a displacement unit, and this unit (7, 9) is arranged such that it can be displaced on the outer toothing (5) of the wheel hub (4).

2. Braking device according to Claim 1, **characterized in that** the outer toothing (5) of the wheel hub (4) engages in an opposite inner toothing (10a) of the adapter ring (7) in order to produce a displacement connection.

3. Braking device according to Claims 1 or 2, **characterized in that** toothings (10b and 6b) that are in mutual engagement between the adapter ring (7) and the brake disc (2) have a larger number of teeth than the teeth of the toothings (5 and 10a) that are in mutual engagement between the wheel hub (4) and the adapter ring (7).

4. Braking device according to Claims 1, 2 or 3, **characterized in that** the brake disc (2) is fixed to the adapter ring (7) in the circumferential direction via the mutual toothings (6; 6a; 6b and 10), and **in that** the brake disc (2) can be fastened to the adapter ring (7) in a clamped manner in the axial direction via the fastening elements which consist of shaped parts that run all the way round or partial shaped parts (20, 21).

5. Braking device according to Claims 1, 2, 3 or 4, **characterized in that** the brake disc (2) as an internally ventilated brake disc has air openings (30, 32).

6. Braking device according to Claim 1, **characterized in that** the fastening elements (9, 9a) consist of spring washers which are arranged in a retaining manner in annular grooves (11, 12) of the toothing of the adapter ring (7) on both sides of the friction surfaces (19) of the brake disc (2).

7. Braking device according to Claims 1 and 6, **characterized in that** the free ends (13, 14) of the spring washers (9, 9a) are angled and can be inserted into the toothing (10) of the adapter ring (7) for fastening purposes.

8. Braking device according to Claims 1 and 7, **characterized in that** the depth of the annular grooves (11, 12) for the spring washers (9, 9a) is smaller than the wall thickness of the adapter ring (7).

9. Braking device according to one or more of the preceding claims, **characterized in that** in each case a gap (15, 16, 17 and 18) is provided between tip circles (K, K1) of the toothing (10, 10a) of the adapter ring (7) and tip circles of the toothing (5) of the wheel hub (4) and of the brake disc (2).

10. Braking device according to one or more of the preceding claims, **characterized in that** the inner toothing (6a) of the brake disc (2) has fewer teeth than the outer toothing (10) of the adapter ring (7) and in each case air openings (22) open out between two adjacent teeth of the inner toothing (6a) of the internally ventilated brake disc (2), said air openings in each case being directed towards a tooth space (N) of the outer toothing (10) of the adapter ring (7).

11. Braking device according to one or more of the preceding claims, **characterized in that** the inner toothing (6) of the brake disc (2) has the same number of teeth as the inner toothing (10a) of the adapter ring (7), and **in that** the internally ventilated brake disc (2) has air openings (30) in the friction surfaces (19, 22, 23), said air openings surrounding the inner toothing (6) in a concentric manner and opening into radial air channels (31) of the internally ventilated brake disc (2).

12. Braking device according to one or more of the preceding claims, **characterized in that** the wheel hub (4) has a clearance (F) in the displacement direction of the adapter ring (7).

13. Braking device according to one or more of the preceding claims, **characterized in that** the adapter ring (7) consists of a sintered part.

14. Braking device according to one or more of the preceding claims, **characterized in that** the adapter ring (7) consists of a sheet steel part.

15. Braking device comprising a brake disc (2) arranged such that it can be displaced on an outer toothing (5) of a wheel hub (4), said brake disc (2) being provided with an inner toothing, **characterized in that** an adapter ring (7) with an inner toothing (10a) is made in one piece with the brake disc (2), and in each case protruding shoulders (26, 27) are integrally formed on the outer friction surfaces (23, 22) of the brake disc, and the total length (LG) of the shoulders (26, 27) and the thickness (D) of the brake disc (2) cover the entire outer toothing (5) of the wheel hub (4).

16. Braking device according to Claim 15, **characterized in that** the brake disc (2) and the adapter ring (7) are integrally connected to one another to form a one-piece displacement part.

17. Braking device according to one or more of the preceding claims, **characterized in that** the adapter ring (7) is designed with a hard surface in the bearing displacement region (toothing 10a) on the toothing (5) of the wheel hub (4).

## Revendications

1. Dispositif de freinage avec un disque de frein (2) placé mobile sur une denture extérieure (5) d'un moyeu de roue (4), disque qui est muni d'une denture intérieure (6), **caractérisé en ce qu'**une autre denture intérieure (10a) est formée par une bague adaptatrice (7), qui présente au moins une longueur (L), qui recouvre toute la denture extérieure (5) du moyeu de roue (4) et qui peut être relié fixement au disque de frein (2) par l'intermédiaire d'éléments de fixation (9, 9a, 20, 21) pour former une unité mobile, et cette unité (7,2) est montée mobile sur la denture extérieure (5) du moyeu de roue (4).

2. Dispositif de freinage selon la revendication 1, **caractérisé en ce que** la denture extérieure (5) du moyeu de roue (4) s'engage dans une denture intérieure (10a) opposée de la bague adaptatrice pour obtenir une liaison de déplacement.

3. Dispositif de freinage selon les revendications 1 ou 2, **caractérisé en ce que** des dentures (10b et 6b) en prise mutuelle entre la bague adaptatrice (7) et le disque de frein (2) présentent un plus grand nombre de dents que les dents en prise mutuelle des dentures (5 et 10a) entre le moyeu de roue (4) et la bague adaptatrice (7).

4. Dispositif de freinage selon les revendications 1, 2 ou 3, **caractérisé en ce que** le disque de frein (2) est immobilisé dans la direction circonférentielle sur la bague adaptatrice (7) par l'intermédiaire des dentures mutuelles (6 ; 6a ; 6b et 10), et **en ce que** le disque de frein (2) peut être serré dans la direction axiale sur la bague adaptatrice (7) par l'intermédiaire des éléments de fixation qui se composent de formages (20, 21) s'étendant sur tout le pourtour ou partiellement.

5. Dispositif de freinage selon les revendications 1, 2, 3 ou 4, **caractérisé en ce que** le disque de frein, en tant que disque de frein à aération interne, possède des ouvertures d'air (30, 32).

6. Dispositif de freinage selon la revendication 1, **caractérisé en ce que** les éléments de fixation (9, 9a) se composent de bagues ressorts qui sont placées tenues dans des rainures annulaires (11, 12) de la denture de la bague adaptatrice (7) des deux côtés des surfaces de frottement (19) du disque de frein (2).

7. Dispositif de freinage selon les revendications 1 et 6, **caractérisé en ce que** les extrémités libres (13, 14) des bagues ressorts (9, 9a) sont coudées et peuvent s'insérer dans la denture (10) de la bague adaptatrice (7) pour s'immobiliser.

8. Dispositif de freinage selon les revendications 1 et 7, **caractérisé en ce que** la profondeur des rainures annulaires (11, 12) destinées aux bagues ressorts (9, 9a) est inférieure à l'épaisseur de paroi de la bague adaptatrice (7).

9. Dispositif de freinage selon une ou plusieurs des revendications précédentes, **caractérisé en ce qu'**à chaque fois, entre les cercles de tête (K, K1) de la denture (10,10a) de la bague adaptatrice (7) et les cercles de tête de la denture (5) de la denture (() du moyeu de roue (4) et le disque de frein (2), il est prévu une fente (15,16, 17 et 18).

10. Dispositif de freinage selon une ou plusieurs des revendications précédentes, **caractérisé en ce que** la denture intérieure (6a) du disque de frein (2) présente moins de dents que la denture extérieure (10) de la bague adaptatrice (7) et, à chaque fois, entre deux dents voisines de la denture intérieure (6a) du disque de frein (2) à aération intérieure débouchent des ouvertures d'air (22) qui sont dirigées chacune vers un entre-dent (N) de la denture extérieure (10) de la bague adaptatrice (7).

11. Dispositif de freinage selon une ou plusieurs des revendications précédentes, **caractérisé en ce que** la denture intérieure (6) du disque de frein (2) présente le même nombre de dents que la denture intérieure (10a) de la bague adaptatrice (7) et **en ce que** le disque de frein (2) à aération intérieure possède dans les surfaces de frottement (19, 22, 23) des ouvertures d'air (30) qui entourent concentriquement la denture intérieure (6) et qui débouchent dans des canaux d'air radiaux (31) du disque de frein (2) à aération intérieure.

12. Dispositif de freinage selon une ou plusieurs des revendications précédentes, **caractérisé en ce que** le moyeu (4) présente un interstice (F) dans la direction de déplacement de la bague adaptatrice (7).

13. Dispositif de freinage selon une ou plusieurs des revendications précédentes, **caractérisé en ce que** la bague adaptatrice (7) est composée d'une pièce frittée.

14. Dispositif de freinage selon une ou plusieurs des revendications précédentes, **caractérisé en ce que** la bague adaptatrice (7) est composée d'une pièce moulée en tôle.

15. Dispositif de freinage avec un disque de frein (2) placé mobile sur une denture extérieure (5) d'un moyeu de roue (4), disque qui est muni d'une denture intérieure, **caractérisé en ce qu'**une bague adaptatrice (7) avec une denture intérieure (10a) est formée d'un seul tenant avec le disque de freinage (2) et des embases saillantes (26, 27) sont formées sur les surfaces de frottement extérieures (23, 22) du disque de frein et toute la longueur (LG) des embases (26, 27) et l'épaisseur (D) du disque de frein (2) couvrent approximativement toute la denture extérieure (5) du moyeu de roue (4).

16. Dispositif de freinage selon la revendication 15, **caractérisé en ce que** le disque de frein (2) et la bague adaptatrice (7) sont reliés par de la matière pour former une partie mobile d'un seul tenant.

17. Dispositif de freinage selon une ou plusieurs des revendications précédentes, **caractérisé en ce que** la bague adaptatrice (7) est durcie en surface dans la zone de mobilité voisine (denture 10a) sur la denture (5) du moyeu de roue (4).
